# EUROPEAN PATENT APPLICATION

(11) **EP 1 853 008 A1**
(43) Date of publication of application: **07.11.2007**
(21) Application number: 06009178.2
(22) Date of filing: 03.05.2006
(51) Int. Cl.: H04L 12/56, H04Q 7/38

(54) **Node, user equipment and method for enabling access of user equipments in a communications system**

(71) Applicant: NOKIA SIEMENS NETWORKS GMBH & CO. KG, 81541 München (DE)
(72) Inventor: The designation of the inventor has not yet been filed

(57) **Abstract**

User equipment, node and method for requesting an allocation of a radio resource by at least one user equipment of a plurality of user equipments from at least one node of a plurality of nodes in a communications system, comprising the steps of:
- said at least one user equipment selecting a message requesting said allocation, wherein said message is dependent upon a state in which said at least one user equipment is in;
- transmitting by said at least one user equipment said message over a channel to said at least one node, and
- allocating by said at least one node upon reception of said transmitted message, said radio resource to said at least one user equipment.

## Description

### Field of the invention

The invention is used in a communications system to enable user equipment present, to access the communications system in an efficient and quick manner.

### Summary of the invention

One of the most important requirements in a communications system such as 3G (Third Generation), is to reduce the control plane latency and short transition times between the states of a UE (User Equipment) or MS (Mobile Station). The states of a UE, defined in the GSM (Global System for Mobile Communications) standard, are two: idle (or inactive) and active. In an idle state, an UE is registered within the communications system and listens for paging messages. When in an active state, a registered UE is communicating.

One common way, by which an UE accesses such a communications system, or changes from an idle state to an active state, where radio resources of the communications system are assigned, is to perform an UL (Uplink) access via a contention channel such as a RACH (Random Access Channel) to a node in the communications system, which in turn provides the radio resources to the UE.

In the event that a plurality of UEs try to access the RACH at the same time, collisions occur and collision resolution mechanisms are implemented in order to resolve them. One such mechanism is that of collision detection wherein signalling from a node is broadcasted resulting in UEs stopping the accessing procedure and each UE then waits for a time interval (back off period), which is fixed or random, before re-starting the access procedure again. The drawback of this mechanism is that a prolonged transition time from one state to the other is incurred for the different UEs.

This problem becomes more severe in B3G (Beyond 3G) communications systems, as due to the higher bandwidth available more UEs are served at the same time, thus increasing the number of accesses over a RACH, consequently the number of collisions and thus the waiting time to change state. Services being made available to UEs, like MBMS (Multimedia Broadcast/Multicast Service), will also increase the number of UEs requesting access via the RACH. Furthermore, with MBMS the RACH is also used for the subscription procedure between a UE and a service provider, further increasing the possible number of collisions.

Additionally, in B3G communications systems, the concept of an area in E-UTRAN (Evolved-Universal Mobile Telecommunications System (UMTS) Terrestrial Radio Access Network), whereby the UE is known to the communications system on an area level, for example in which cell the UE is located, has moved to, or within which URA (UTRAN Registration Area) the UE is located, whereby the URA is an area covered by a number of cells. As UEs have to transmit location update messages whenever they change location, an increase in the number and frequency of these messages being transmitted over the RACH will occur.

As mentioned hereinabove, GSM has two states. In W-CDMA (Wideband-Code Division Multiple Access), besides idle and active states, additional paging states, based on the location knowledge of a UE have been defined, these being URA-PCH (URA-Paging Channel) state and Cell-PCH. These new states also compete for the RACH and suffer from the same drawbacks as mentioned previously.

In B3G communications systems a dormant state of an UE is introduced. This additional state has been introduced due to the fact that different transition times are envisaged for UEs changing from one state to another, as well as a large number of UEs being present at any one time (more than 200 UEs), in the communications system.

A UE must be able to go from an idle state to an active state in 200ms (milli seconds), and from dormant to active in 50ms. This also depends on the knowledge that the communications system has as to the location of a UE in the state it is in. As all UEs when changing state, irrespective of the state they are in, need the RACH in order to access the communication system, for example, either to request resources or to provide location updates, transition times will increase causing UEs to have to wait longer. Consequently, UEs will have to wait longer for requested resources and furthermore, the set timing requirements will not be met causing an increase in signalling due to UEs stopping and starting an access procedure, leading to an inefficient and slow communications system.

The nodes receiving the different requests, via transmitted messages are always in control of the access procedures and therefore must have sufficient amounts of processing power to handle requests. UEs on the other hand, do not have a high degree of independence as they are dependent on nodes with regards to an allocation of radio resources.

A need therefore exists, for a technique that can in a simple and efficient manner overcome the above mentioned issues, while at the same time allowing UEs to access a communications system and in an efficient manner request resources and change state. Furthermore, a need exists for reducing the amount of control of the access procedure from nodes and giving more control to the UEs so that they can act independently within a communications system.

With the present invention, the above mentioned issues are resolved. The proposed technique allows for an improved and simple procedure for allocating a radio resource to user equipment and reduces the time that user equipment needs to wait before a radio resource is allocated so that it can change state.

The technique is achieved by the teachings contained in the independent method, node and user equipment claims.

Said independent method claim requests an allocation of a radio resource by at least one user equipment of a plurality of user equipments from at least one node of a plurality of nodes in a communications system, comprising the steps of:
- said at least one user equipment selecting a message requesting said allocation, wherein said message is dependent upon a state in which said at least one user equipment is in;
- transmitting by said at least one user equipment said message over a channel to said at least one node, and
- allocating by said at least one node upon reception of said transmitted message, said radio resource to said at least one user equipment.

Said independent user equipment claim is arranged to request an allocation of a radio resource from at least one node of a plurality of nodes in a communications system, comprising of:
- selecting means adapted to selecting a message requesting said allocation, wherein said message is dependent upon a state in which said user equipment is in;
- transmitting means adapted to transmitting said message over a channel to said at least one node, and
- receiving means adapted to receive a message from said at least one node indicating the allocated radio resources.

Said independent node claim is arranged to allocate a radio resource to at least one user equipment of a plurality of user equipments in a communications system, comprising of:
- receiving means adapted to receive a message from said at least one user equipment requesting said allocation, wherein said message is dependent upon a state in which said user equipment is in;
- control means adapted to verify and process said message;
- allocation means adapted to allocate said radio resource, upon said control being completed, and
- transmitting means adapted to transmit said a message indicating said allocation to said at least one user equipment.

The advantage of the above is that as the message requesting the allocation of a radio resource is dependent upon the state in which the user equipment is in at the time the request is transmitted, the allocation is performed faster and reduces the time delay a user equipment has to wait before allocation is performed, as a node receiving such a request does not need to perform any additional signalling or message exchange with the user equipment, but can immediately proceed with allocating the requested radio resource. This increases the overall efficiency of the access procedures and of the communications system. Additionally, by enabling user equipments to select a message depending on their state, user equipments are rendered more independent in the way they operate within a communications system.

Further advantages can be seen in the dependent claims, wherein:
The inventive technique can be applied when the state of a user equipment is one of the following: an idle state, a dormant state, a paging state.

The message transmitted from the user equipment comprises of at least a first data part of a plurality of data parts, wherein the at least first data part relates to an identification of the at least one user equipment in the communications system transmitting the message, allowing for a receiver of the message to quickly and efficiently recognise the sender.

Furthermore, the message further comprises of a second data part of said plurality of data parts, the second data part relating to information of a previous connection and/or a requested connection of said at least one user equipment to said at least one node, allowing for a faster allocation of the requested radio resources, as less processing at the node is required. Additionally, the message is transmitted over a random access channel (RACH) allowing user equipments to access a communications system and request allocation of resources. The random access channel comprises of a number of resources allocated it, wherein the number of resources is shared by all the user equipments present. Thus enabling better resource management.

Furthermore, user equipments can be mobile stations and are capable of using a number of access technologies to access the communications system. In this way the inventive technique, is not limited to any particular access technology but can be used with a number of them, making the technique versatile and easy to implement with existing user equipments. These technologies can be one of the following: code division multiple access, time division multiple access, frequency division multiple access, orthogonal frequency division multiple access, space division multiple access, carrier sense multiple access, multi-frequency time division multiple access, wideband-code division multiple access.
The information relating to the previous connection and/or the requested connection is at least one of the following: a radio access bearer/radio bearer configuration parameter, a quality of service requirement parameter, a signal reception quality parameter, a radio access bearer/radio bearer configuration modification indicator parameter, an indication of the amount of data that it wants to transmit with the acceptable delay supported by the data to be transmitted, enabling the user equipment to choose the information that it needs to transmit, depending on the environment that it currently is in. This also allows a receiver of this information to reduce the amount of signalling and processing required and speed up the allocation of the requested radio resources.

### Short description of the drawings

The present invention will become more apparent from description given herein below and from the accompanying drawings which are given by way of information only, and thus are not limitative of the present invention, and wherein:
- Fig. 1,: depicts a communications system wherein the inventive technique is applicable.
- Fig. 2,: is a flow chart representation of the steps executed by the inventive technique.
- Fig. 3,: the means arranged to execute the inventive method are shown in bloc diagram form.

Figures 4a and 4b depict experimental results indicating the performance of the inventive technique when requesting allocation of resources according.

### Detailed description of the invention

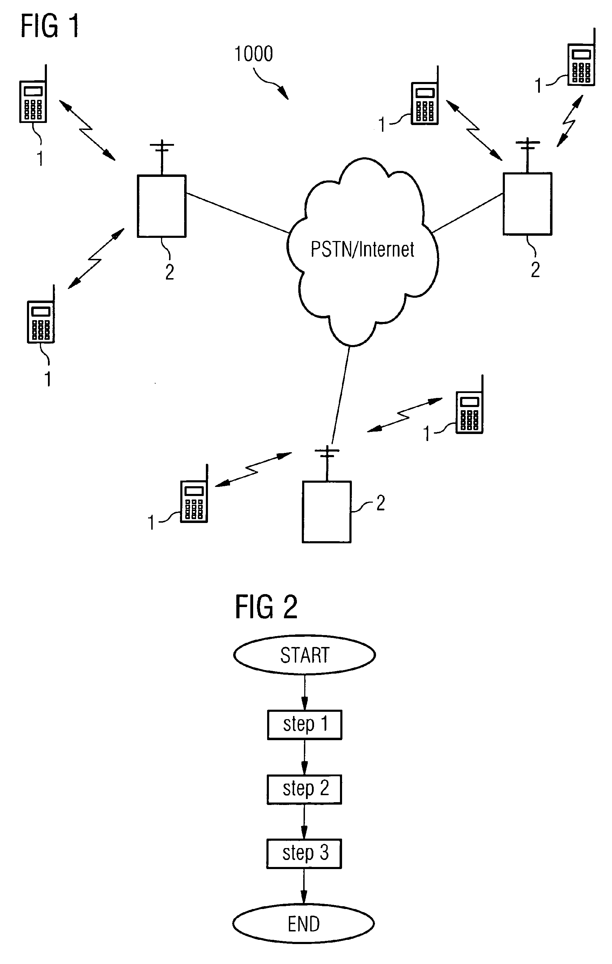

Communications system 1000, wherein the inventive technique is applicable, as depicted in fig. 1, comprises of a number of user equipments 1 and a number of nodes 2. User equipments 1, can be mobile stations, computers or any other communications device that allows for connection to a service available by a network operator.
Nodes 2, can be access nodes such as a BSC (base station controller) or a RNC (radio network controller) and are the point at which a user equipment 1 can connect to the PSTN (Public Switched Telephone Network), to the Internet or to other available services. For ease of understanding the different means that manage and allow the coupling of a node 2 in communications system 1000, for example MSCs (Mobile Switching Centres) are not depicted, however a person skilled in the art, would know of their existence in communications system 1000.

Nodes 2 and user equipments 1, are arranged to use a number of access technologies in order to connect to each. These technologies can be one of the following: code division multiple access, time division multiple access, frequency division multiple access, orthogonal frequency division multiple access, space division multiple access, carrier sense multiple access, multi-frequency time division multiple access, wideband-code division multiple access.

In one embodiment of the inventive technique, both nodes 2 and user equipments 1 use one specific access technology. In another embodiment of the inventive technique, nodes 2 and user equipments 1 use a combination of different access technologies.

In fig. 2, the steps required to perform the inventive technique are shown.

In step 1, user equipment 1 selects a message to be transmitted to node 2, requesting the allocation of radio resources. The message selected being dependent on the state the user equipment is in.

In step 2, user equipment 1 transmits the message requesting the allocation over a radio channel to node 2. The radio channel used is the RACH.

A request for allocation of a radio resource can be made depending on the state a user equipment 1 is in. The states that a user equipment 1 can be in, are one of the following:
- idle state, wherein user equipment 1 is registered within communications system 1000 and is known by a node 2 and listens for paging messages being transmitted by node 2, but is not pursuing an active communication. During this state the user equipment reduces its power consumption.
- paging state, wherein user equipment 1 searches for other user equipments or nodes, and transmits paging messages to notify other listening devices that it is looking for devices and/or possible available services.
- dormant state, wherein the user equipment 1 has no connection via a radio channel to a node 2, for example when an user equipment is activated or rebooted.

In step 3, upon receiving the transmitted message, node 2 then proceeds to allocate the requested radio resources for use to user equipment 1.

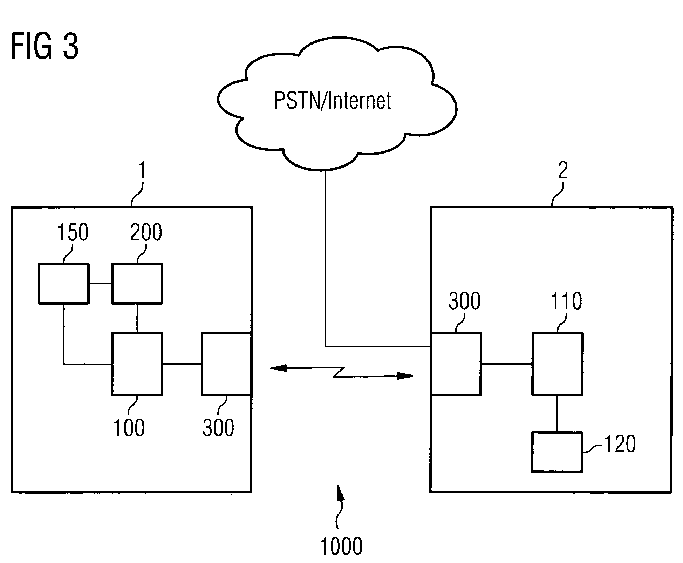

In fig. 3 the means arranged to execute the inventive method are shown in bloc diagram form.

User equipment 1 selects a message to be transmitted using selecting means 200 that are arranged to select the appropriate message depending on the state user equipment is in, requesting allocation of radio resources, when user equipment 1 wants to access communications system 1000.

Transmission to node 2 is arranged via transmit/receive means 300 over the RACH. Additionally, user equipment 1 comprises of control means 100 arranged to control the user equipment 1. In one embodiment of the inventive technique the selecting means 200 are part of control means 100. In another embodiment of the inventive technique the selecting means 200 are separate from the control means 100 and are coupled together. Selecting means 200 are further arranged to verify the current state of the user equipment 1, irrespective of whether being part of control means 100 or separated from them.

When verifying the current state, selecting means 200, check state indicator means 150 that store the information relating to the state of the user equipment 1. State indicator means 150 can be part of control means 100 or coupled to them. In another embodiment, in order to reduce the amount of intra-device signalling control means 100 are arranged to transmit the current state information to selecting means 200 which are arranged to check the contents of the received transmission. State indicator means 150 can be a RAM (Random Access Memory), a ROM (Read Only Memory), an EPROM (Erasable Programmable Read Only Memory) or any other type of memory or storage device located on user equipment 1.

The transmitted message, transmitted by means 300, comprises of a plurality of parts, the first part comprising information relating to an identification of the user equipment 1 within the communications system 1000. The identification can be the user equipment identification that is assigned to each individual user equipment 1 by the communications system 1000 as in the E-UTRAN concept or the IMSI (International Mobile Subscriber Identity) as used in GSM or UMTS or any other equivalent identification that uniquely identifies the user equipment, and is held by control means 100.

For example a user equipment 1 having internet capabilities could also transmit its MAC (Media Access Control) address, IP (Internet Protocol) address or EUI (Extended Unique Identifier) as its user equipment identification.

A second part of the transmitted message comprises of information relating to a previous connection and/or to a requested connection of the user equipment 1. This information, also held by control means 100, permits node 2 to avoid having to access and find stored information relating the received identifier of the user equipment 1 from the first part of the message to stored configurations or previously allocated resources either within node 2 itself or at a central network management device. In this way user equipment 1, reduces the time required for an allocation to be made as the information required is transmitted directly to node 2. Therefore, radio resources can be allocated and a user equipment 1 can quickly access communications system 1000.

The choice of selecting an appropriate identification is left to the user equipment 1 to decide on an ad-hoc basis depending on the services that are to be requested, the amount of traffic and so on, enabling the user equipment 1 to chose the most efficient option and to rely less on predefined lists of options to be used, provided from a network operator or a node 2.

The information relating to a previous connection and/or to a requested connection of the user equipment 1, can be at least one of the following:
- a radio access bearer (RAB) or radio bearer (RB) configuration parameter such as a service indicator or a packet size indicator, indicating the service the Access Stratum (AS) provides the Non Access Stratum (NAS) for transfer of user data between user equipment 1 and the core network (CN) or the service provided by the layer 2 for transfer of user data between user equipment 1 and UTRAN. This information is a direct resource request as it relates to a previously existing configuration. This information is transmitted, for example when a user equipment 1 is in dormant state. Wherein the CN is an evolved GSM core network infrastructure or any new UMTS core network infrastructure within communications system 1000, integrating circuit and packet switched traffic. This may include such functions as the MSC (Mobile Switching Centre), VLR (visitor Location Register), HLR (Home Location Register), SGSN (Serving GPRS Support Node) and GGSN (Gateway GPRS Support Node). The function of the AS is to support the NAS. This includes the functions and protocols for the transport of information across the UTRAN and air interface. The NAS is a functional layer running between the user equipment and the CN. The layer supports traffic and signalling messages between the CN and UE (User Equipment).
- a quality of service (QoS) requirement parameter, indicating the QoS wanted by the user equipment 1, therefore allowing node 2 to allocate the necessary radio resources.
- a signal reception quality parameter, indicating the strength of a signal received by user equipment 1, therefore allowing node 2 to allocate the necessary radio resources to ensure that the signal reception quality needed by the user equipment 1 is achieved.
- a radio access bearer (RAB) or radio bearer (RB) configuration modification indicator parameter, indicating to node 2 a change in a previously existing configuration. In one embodiment, user equipment 1 transmits the RAB or RB configuration parameter with the RAB or RB configuration modification indicator parameter, in the message to node 2. Thus reducing the amount of processing required by node 2 to allocate radio resources. In another embodiment, user equipment 1 transmits the RAB or RB configuration modification indicator parameter, in the message to node 2, whereby then node 2 either checks, using control means 110, stored configurations relating to the user equipment 1 or requests from user equipment 1 to supply the previous configuration parameter. The RAB or RB configuration modification indicator parameter is transmitted when traffic demands of a user equipment 1 have changed over a previously existing configuration. The parameter can be a particular coded bit field in the second part of the message indicating a increase or decrease ratio for example by using a larger or smaller bit value in relation to a predefined bit value indicating no change.

Additionally, other information relating to measurements on the downlink pilot channels or to changes in the downlink reception quality in relation to a previous configuration of a user equipment 1 can also be transmitted.

Furthermore, the user equipment 1 can also transmit information providing an indication of the amount of data that it wants to transmit with the acceptable delay supported by the data to be transmitted. This can be included with the QoS parameter mentioned hereinabove or can be transmitted separately. Alternatively, user equipment 1 can transmit an indication of the service it requires, with the acceptable delay supported by the service.
It is also possible for user equipment 1, to transmit an indication of the service it requires with the amount of data that it wants to transmit with the acceptable delay supported by the data and/or service. This can be included with the QoS parameter mentioned hereinabove or can be transmitted separately.

As mentioned previously, the measurements can be contained in a particular coded bit field in the second part of the message. In particular, when the information relates to changes in the downlink reception quality in relation to a previous configuration, a differential value related to the pilots on the different subcarriers used in the previous configuration taking into account signal interference and/or a value relating to the overall change in the received band of the user equipment 1 with respect to the power of the pilot signal.

Depending on the state of the user equipment 1 when requesting radio resources and on the current environment in which it is present, both values can be transmitted or just one of them. For example, if interference is low or not critical for the user equipment 1, then only the value relating to the overall change in the received band is transmitted. Node 2, uses the information received when allocating resources and ensuring that transmission sent to user equipments 1, reach their intended recipients.

Node 2 has transmit/receive means 300 arranged to transmit and receive messages from user equipments 1 as well as from the PSTN or internet and provides user equipments 1 with access to communications system 1000.

Upon receiving the transmitted message via means 300, node 2 verifies the contents of the message using control means 110. Once the first and second parts of the message have been verified and the information extracted and processed by control means 110, allocating means 120 use the processed information and allocate the requested radio resources for use by the user equipment 1.

Node 2 transmits a message back to user equipment 1, received via means 300, indicating the radio resources allocated.

In one embodiment allocating means 120 can be integrated within control means 110, while in another embodiment the two are separate but coupled together.

As mentioned hereinabove, an aim of the inventive technique, is to achieve a reduction in the time a user equipment 1 has to wait for radio resources are allocated to it, once a request has been made.

Node 2 receives a message, transmitted over the RACH, requesting allocation of radio resources from a user equipment 1. The RACH comprises of a number of resources allocated to the RACH, wherein all user equipments 1 share them. This number of resources comprises of subcarriers allocated for use by the RACH. The allocation of radio resources enables user equipments 1 to access via node 2 the communications system 1000.

The resources available are divided in the frequency domain, thus enabling a node 2 to flexibly handle a number of such requests. However, as it is important to avoid collisions, instead of resolving them using back off mechanisms for example, in order to reduce the waiting time before allocation is effected, the inventive technique is further arranged to also apply a two dimensional division of the resources available when used for a group of user equipments 1 belonging to a specific state, for example for user equipments 1 being in a dormant state. In such a case the resources are divided in the frequency domain as well as in the time domain.

In one embodiment, the available resources in the RACH (subcarriers) are divided by control means 110 into at least two subgroups: one being divided in the frequency domain and the other being divided in the frequency domain and time domain and used for user equipments 1 in a specific state.

A person skilled in the art however, would also be aware that in another embodiment such a division could be removed and the resources divided into one or two domains on an ad-hoc basis. In both embodiments, allocating means 120, when allocating resources can also take into account the current load of traffic present, the number of user equipments 1 present or the traffic requirements or any other parameters.

Upon reception of a message, node 2, using control means 110, extracts and processes the identification of the user equipment 1 that transmitted the message. Taking each identification received and performing a modulo N operation on it, where N is the number of subcarriers allocated to the RACH, control means 110 distribute the user equipments within the frequency domain. Allocating means 120 then allocate the appropriate resources or if control means 110 has determined that a user equipment belongs to a specific state, allocating means 120 then perform a further modulo M operation, where M is the number of time shifts in the time domain. By dividing into two domains and performing two modulo operations (modulo(NxM)), user equipments 1 are optimally separated and a nearly collision free allocation of requested resources is performed by allocating means 120, reducing in this way the waiting time for allocation and the need to perform back off procedures.

An example herein below is given for illustrative purposes and with no limiting the present inventive technique, wherein N = 4 and M = 3.

Distribution in the frequency domain results in (0, 1, 2, 3). Further distribution in the time domain, modulo (4x3) results in (0, 4, 8). The time shifts are allocated by allocating means 120 beginning from the lower value with respect to the downlink reception of a certain pilot channel or field in the downlink. Additionally, the operation performed in the time domain also takes into account any runtime effects caused by guard periods. Consequently, user equipments 1, are grouped within a total of 12 different resource allocations, providing a sufficient distribution to ensure a low probability of collisions. A person skilled in the art would also be aware that on increasing the number of subcarriers available and/or the time shifts a larger distribution would be generated and more resource allocations are possible.

In a further embodiment, in order to reduce the amount of signalling on the RACH, node 2 can dedicate a number of resources for a particular state,for example for the dormant state, and transmit information relating to this on a broadcast channel. User equipments 1 that want to change from a dormant to an active state and are time synchronised with node 2, can receive the information and then access the communications system 1000 using the dedicated resources. Therefore the number of user equipments 1 trying to access over the RACH as described hereinabove is reduced.

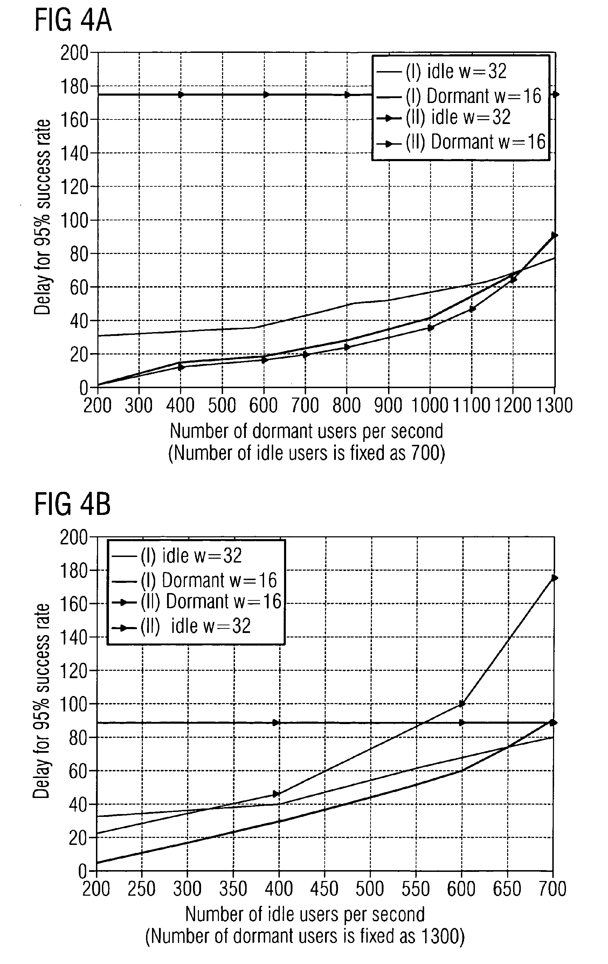

Figures 4a and 4b depict experimental results of user equipments 1 requesting allocation of resources according to the inventive technique. Two different scenarios, I and II were tested.

In scenario I, user equipments 1 were assumed to belong to one of two states, dormant and idle having different back off parameters w. The RACH resources available are shared by all user equipments 1.

In scenario II, user equipments 1 were assumed to belong to one of two states, dormant and idle having different back off parameters w. Different RACH resources are allocated to dormant and idle user equipment 1. In this scenario more RACH resources are allocated to dormant user equipment 1, as they require allocation faster than an idle user equipment 1 which still maintain a connection with node 2.

In both scenarios the back off parameters w were the same for user equipments 1 belonging to the same state. For idle user equipment w = 32, for dormant user equipment w = 16.

In fig. 4a, it can be seen that the delay performance for idle user equipments 1, when sharing the RACH resources, outperforms the delay performance for idle user equipments 1 that have allocated RACH resources. In fig. 4b, it can be seen that both idle and dormant user equipments 1 have a better delay performance when sharing the RACH, than for those user equipments 1, both idle and dormant, that have allocated RACH resources.

As it can be seen, sharing RACH resources wherein a user equipment 1 requests an allocation of radio resources is more efficient than allocating RACH resources for different user equipments 1 depending on their respective state.

Although the invention has been described in terms of a preferred embodiment described herein, those skilled in the art will appreciate other embodiments and modifications which can be made without departing from the scope of the teachings of the invention. All such modifications are intended to be included within the scope of the claims appended hereto.

## Claims

1. Method for requesting an allocation of a radio resource by at least one user equipment (1) of a plurality of user equipments (1) from at least one node (2) of a plurality of nodes (2) in a communications system (1000), comprising the steps of:
- said at least one user equipment (1) selecting a message requesting said allocation, wherein said message is dependent upon a state in which said at least one user equipment (1) is in;
- transmitting by said at least one user equipment (1) said message over a channel to said at least one node (2), and
- allocating by said at least one node (2) upon reception of said transmitted message, said radio resource to said at least one user equipment (1).

2. Method according to claim 1, wherein said state is one of the following: an idle state, a dormant state, a paging state.

3. Method according to any previous claim, wherein said message comprises of at least a first data part of a plurality of data parts, said at least first data part relating to an identification of said at least one user equipment (1) in said communications system (1000).

4. Method according to claim 3, wherein said message further comprises of a second data part of said plurality of data parts, said second data part relating to information of a previous connection and/or a requested connection of said at least one user equipment (1) to said at least one node (2), when said state is a dormant state.

5. Method according to claim 4, wherein said information is at least one of the following: a radio access bearer or radio bearer configuration parameter, a quality of service requirement parameter, a signal reception quality parameter, a radio access bearer or radio bearer configuration modification indicator parameter, an indication of the amount of data to be transmitted with an acceptable delay supported by said amount of data.

6. Method according to any one of the previous claims 1 to 5, wherein said channel over which said message is transmitted is a random access channel.

7. Method according to claim 6, wherein said random access channel comprises of a number of resources allocated for said random access channel, said number of resources being shared by said plurality of user equipments (1).

8. User equipment (1) arranged to request an allocation of a radio resource from at least one node (2) of a plurality of nodes (2) in a communications system (1000), comprising of:
- selecting means (200) adapted to selecting a message requesting said allocation, wherein said message is dependent upon a state in which said user equipment (1) is in;
- transmitting means (300) adapted to transmitting said message over a channel to said at least one node (2), and
- receiving means (300) adapted to receive a message from said at least one node (2) indicating the allocated radio resources.

9. User equipment (1) according to claim 8, wherein said user equipment (1) is a mobile station.

10. User equipment (1) according to claims 8 to 9, arranged to use a number of access technologies to connect to said at least one node.

11. User equipment (1) according to claim 10, wherein said number of access technologies comprises one of the following access technologies: code division multiple access, time division multiple access, frequency division multiple access, orthogonal frequency division multiple access, space division multiple access, carrier sense multiple access, multi-frequency time division multiple access, wideband-code division multiple access.

12. Node (2) in a communications system (1000) arranged to allocate a radio resource to at least one user equipment (1) of a plurality of user equipments (1) comprising of:
- receiving means (300) adapted to receive a message from said at least one user equipment (1) requesting said allocation, wherein said message is dependent upon a state in which said user equipment (1) is in;
- control means (110) adapted to verify and process said message;
- allocation means (120) adapted to allocate said radio resource, upon said control being completed, and
- transmitting means (300) adapted to transmit said a message indicating said allocation to said at least one user equipment (1).

13. Node (2) according to claim 12, wherein said node is an access node.

14. Node (2) according to claim 13, wherein said access node is at least one of the following: a base station controller, a radio network controller.

15. Communications system (1000) comprising one of the following: at least one user equipment (1) according to claims 8 to 11, at least one node (2) according to claims 12 to 14.
